Europäisches Patentamt

European Patent Office

Office européen des brevets

(19)

(11) Veröffentlichungsnummer: **0 134 387**
**B1**

(12) # EUROPÄISCHE PATENTSCHRIFT

(45) Veröffentlichungstag der Patentschrift:
**11.05.88**

(21) Anmeldenummer: **84101845.0**

(22) Anmeldetag: **21.09.81**

(60) Veröffentlichungsnummer der früheren Anmeldung
nach Art. 76 EPÜ: **0051145**

(51) Int. Cl.⁴: **G 11 B 23/04**

(54) **Magnetbandkassette, insbesondere Kompaktkassette.**

(30) Priorität: **19.02.81 DE 8104556 U**

(43) Veröffentlichungstag der Anmeldung:
**20.03.85 Patentblatt 85/12**

(45) Bekanntmachung des Hinweises auf die Patenterteilung:
**11.05.88 Patentblatt 88/19**

(84) Benannte Vertragsstaaten:
**AT BE CH DE FR GB IT LI NL SE**

(56) Entgegenhaltungen:
**DE - A - 2 056 932**
**FR - A - 2 233 675**

(73) Patentinhaber: **BASF Aktiengesellschaft,
Carl-Bosch-Strasse 38, D-6700 Ludwigshafen (DE)**

(72) Erfinder: **Stumpfi, Werner, Dr., Burbacher Strasse 24,
D-6700 Ludwigshafen (DE)**
Erfinder: **Engel, Friedrich, Hauptstrasse 54,
D-6710 Frankenthal (DE)**
Erfinder: **Fitterer, Horst, Neckarpromenade 34,
D-6800 Mannheim 1 (DE)**
Erfinder: **Kreimes, Norbert, Rheinecke 14,
D-6700 Ludwigshafen (DE)**
Erfinder: **Pfefferkorn, Dietmar, Muehlweg 71,
D-6944 Hemsbach (DE)**
Erfinder: **Schaeffer, Norbert, Vogelsang 19,
D-6705 Deidesheim (DE)**
Erfinder: **Schmidts, Kurt, Kornstrasse 10, D-7640 Kehl
(DE)**

## Beschreibung

Die Erfindung bezieht sich auf eine Magnetbandkassette, insbesondere Kompaktkassette, mit mindestens einem Wickelkern, der aus zwei Ringteilen, einem Innenteil mit Mitnehmerzapfen und einem Aussenteil besteht, wobei die Mitnehmerzapfen mit Aussenstegen eines geräteseitigen Antriebsdorns zum Drehantrieb des Wickelkerns in Eingriff treten, wobei zwischen Innenflächen des Kassettengehäuses und dem Ringteil nur ein geringes Spiel vorhanden ist, wobei zwischen Innen- und Aussenteil ein vorbestimmtes, radiales Spiel vorgesehen ist und wobei ein Ringteil mindestens einen Mitnehmerfortsatz aufweist, der jeweils mit einer Mitnehmerausnehmung im anderen Ringteil zum Drehantrieb gekoppelt ist.

## Stand der Technik

Aus der FR-A 2 233 675 ist eine Bandkassette zu Instrumentationszwecken bekannt, die Verwendung eines Magnetbandes ist allerdings darin nirgends erwähnt. Der daraus bekannte Wickelkern setzt sich aus einer Nabe zum Eingriff des Antriebsdorns und einem Ringteil zum Auf- und Abrollen des Bandes zusammen. Dazwischen sind Verbindungseinrichtungen vorgesehen, die eine Radialverschiebung von Nabe und Ringteil gegeneinander gestatten und dadurch Abstandstoleranzen zwischen den Antriebsachsen verschiedener Geräte ausgleichen sollen. Die Nabe kann dabei am Innenumfang mit unbeweglichen Mitnehmerzapfen versehen sein, die in Ausnehmungen des Ringteils greifen. Die Nabe und der Ringteil können auch einstückig aus elastischem Material gefertigt sein, wobei deformierbare Arme zwischen beiden Teilen ausgebildet sind.

Aus der US-A 3 512 734 ist eine Filmkassette bekannt, in der ein Wickelkern für den Film mit federnden Kopplungsfingern ausgebildet ist, die derartig angeordnet und geformt sind, dass sich in Bezug auf eine bestimmte Form der Antriebsachse für den Wickelkern in einer Richtung eine Drehmitnahme des Wickelkerns und in der entgegengesetzten Richtung gerade keine Drehmitnahme, sondern eine Freigabe des Wickelkerns bewirkt wird, so dass die Antriebsachse sich dann relativ zum ruhenden Wickelkern dreht. Die Federeigenschaft der Kopplungsfinger dient nur dazu, selbsttätig von einem Betriebszustand in den anderen umschalten zu können. Ausser ihrer Kopplungsfunktion zur Antriebsachse haben die Kopplungsfinger keinerlei Einfluss auf das am Wickelkern zur Wirkung kommende Drehmoment.

Gemäss DE-OS 2 056 932 ist es bekannt, eine Bandkassette mit Bandwickeln auf Wickelkernen auszubilden, die auf Lagereinrichtungen mit Kugellagern drehbar sind. Um Toleranzen in der Stellung und Ausbildung der Antriebsspindeln auszugleichen, hat man einen Innenteil des Wickelkerns gross gegenüber dem Spindeldurchmesser ausgebildet, so dass Schrägstellungen der Spindel tolerierbar sind. Die Wickelkerne hat man zwischen den Kassettenwänden eng toleriert, um in Verbindung mit umfangreicheren Bandführungseinrichtungen einen Kontakt der Bandwickelflächen mit den Kassettenwänden zu verhindern. Für Kompaktkassetten sind diese Massnahmen zu aufwendig, da sie für eine Massenherstellung nicht geeignet sind.

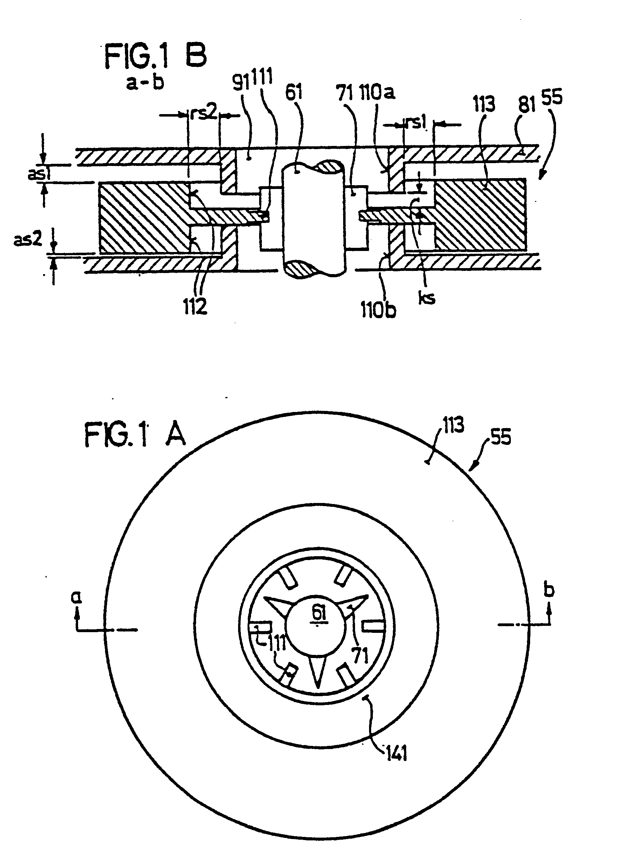

Beim Kompaktkassetten-System wird die Anpassung der Kassette an den Rekorder bzw. an dessen Antriebsdorne dadurch ermöglicht, dass die Wickelkerne in radialer und in axialer Richtung gegenüber dem Kassettengehäuse Spiel besitzen (Figur 1). Nach DIN 45 516 sind folgende Toleranzen vorgesehen:

Spiel in radialer Richtung min.: 1 mm, max: 1,9 mm.
Spiel in axialer Richtung max.: 1,3 mm.

Das Spiel in radialer Richtung des Kerns, gegenüber dem Kassettengehäuse verursacht folgende Nachteile:
- Beim schnellen Umspulen schlagen die Wickelkerne - vor allem auf der Abwickelseite - gegen das Gehäuse bzw. den Gehäusekragen und erzeugen ein deutlich hörbares Klapper-Geräusch.
- Bei Spielbetrieb und senkrechter Lagerung der Kassette im Rekorder wälzt sich der Kern auf dem Gehäusekragen auf der Abwickelseite so ruckweise ab, dass schnelle Bandzugsänderungen entstehen, die wiederum zu Tonhöhenschwankungen führen.

Das Spiel in axialer Richtung ermöglicht es dem Wickelkern bzw. dem Bandwickel – wenn radiales Spiel vorhanden ist – sich schräg gegenüber dem Kassettenboden bzw. -Deckel einzustellen, das heisst zu taumeln. Dadurch kann
- das Band unregelmässig aufgewickelt werden. Der Bandwickel wird rauh, das Reibmoment kann stark zunehmen. Häufig kommt es sogar zum Festlaufen der Kassette
- bei plötzlichem Start und Stop der Kassette das Band vom Bandwickel abrutschen (umklappen) und sich zwischen Bandwickel und Kassettengehäuse festklemmen.

## Aufgabe der Erfindung

Die vorliegende Erfindung hat sich deshalb die Aufgabe gestellt, die Wickelkerne im Kassettengehäuse enger zu tolerieren, wobei ausser einem verbesserten Kontakt zwischen Wickelkern und Antriebsdorn das notwendige Spiel zwischen Wickelkern und Antriebsdorn vorwiegend vom Wickelkern aufgebracht wird. Darüber hinaus soll beim Eintritt des Antriebsdorns in die Kassette eine ausreichende Kopplung zum Wickelkern trotz Aufrechterhaltung des notwendigen Spiels beim Betrieb der Kassette erreicht werden.

## Lösung gemäss vorliegender Erfindung

Die Aufgabe wird dadurch gelöst, dass entweder der den Mitnehmerfortsatz aufweisende Innenteil selbst oder mindestens ein Element zwischen dem Mitnehmerfortsatz und der Mitnehmerausnehmung elastisch federnd ausgebildet ist zur Kopplung des Innenteils zum Drehantrieb des Wickelkerns und zur Herstellung des vorbestimmten Spiels zwischen den Teilen.

Unter «Spiel» wird hier im weiteren Sinne verstanden, dass zwischen Innen- und Aussenteil eine Relativbewegung möglich ist. Damit ist es vorteilhaft möglich, eine optimale Anpassung des Aussenteils des Wickelkerns an das Kassettengehäuse vorzunehmen und ein gerade ausreichendes axiales und/oder radiales Spiel zwischen Kern und Gehäuse zu erreichen, wobei das erforderliche Spiel für die Anpassung der Kassette an die Antriebsdorne des Rekorders durch die Ausgestaltung und Anordnung vom Innenteil zum Aussenteil des Wickelkerns realisiert wird.

Dabei ist es zweckmässig, dass – wie an sich bekannt – zwischen Innen- und Aussenteil des Wickelkerns im wesentlichen nur radiales Spiel vorhanden ist, wodurch Toleranzen und Ungenauigkeiten der Antriebsdorne ausgeglichen werden können.

Wenn der Innenteil aus elastischem und der Aussenteil aus unelastischem Material besteht, kann erreicht werden, dass der Innenteil beim Ein- oder Austritt des Antriebsdorns nachgibt. Es wird sogar möglich, einen solchen elastischen Innenteil fest auf dem Antriebsdorn vorzusehen, wenn nur sichergestellt wird, dass beim Eintritt in eine Kassette der Innenteil in Mitnahmeverbindung mit dem Aussenteil des Wickelkerns kommt und beim Abnehmen der Kassette auch wieder ausser Eingriff davon kommt.

Weiterhin kann der Innenteil als Klemmteil für den Antriebsdorn ausgebildet sein, wodurch die Mitnahme bei Drehung der Antriebsdorne verbessert wird und das Auftreten von unerwünschten Eigenbewegungen des Wickelkerns zum jeweiligen Antriebsdorn vermeidbar wird.

Zweckmässig bestehen das oder die elastisch federnden Zwischenelemente aus gummielastischem Material, insbesondere Schaumstoff, oder flexiblem Folienmaterial, wodurch sie wirtschaftlich herstellbar sind. Schliesslich lassen sich mehrere Federelemente zentral-symmetrisch oder ein Federelement asymmetrisch am Wickelkern anordnen, wodurch entweder eine zentrische oder exzentrische Wickelkernlagerung auf dem Antriebsdorn erreichbar ist.

Auch ist der Innenteil als Klemmteil wie oben erwähnt entweder für den Antriebsdorn oder für den Ringkragen in der Kassette ausbildbar, wodurch eine definierte Zuordnung erreicht wird.

Einzelheiten der Erfindung sind anhand in der Zeichnung dargestellten Ausführungsbeispiele nachfolgend beschrieben. Es ist dargestellt in

Fig. 1A und 1B ein bekannter einsteliger Wickelkern in einem Kassettengehäuse mit in Eingriff stehendem Antriebsdorn

A in Draufsicht mit abgenommenem Kassettendeckel
B im Schnitt a-b
Fig. 2A und 2B ein erfindungsgemässer zweiteiliger Wickelkern mit in Eingriff stehendem Antriebsdorn im Kassettengehäuse

A in Draufsicht mit abgenommenem Kassettendeckel
B im Schnitt a-b
Fig. 3 ein Wickelkern gemäss Figur 2B, jedoch mit geringem radialem Spiel
Fig. 4A eine Schnittansicht des Innenteils im unteren Gehäuseteil der Kassette
Fig. 4B ein geschlitzter Innenteil eines zweiteiligen Wickelkerns in Draufsicht
Fig. 5 ein zweiteiliger Wickelkern mit zur Horizontalebene unsymmetrischem Aussenteil.

Wie in der Einleitung erwähnt, betragen die einzelnen Spielwerte $1\,\text{mm} \leqq rs \leqq 1{,}9\,\text{mm}$ und $as > 1{,}3\,\text{mm}$.

Fig. 6A und 6B zweiteilige Wickelkerne mit flexibler Zwischenlage zwischen Innen- und Aussenteil
Fig. 7 ein zweiteiliger Wickelkern, wobei der Innenteil mit dem Antriebsdorn integriert ausgebildet ist.

Fig. 1A und 1B zeigt Ansichten eines üblichen, in Kompakt-Kassetten benutzten Wickelkerns 55 in Verbindung mit einem in Eingriff befindlichen geräteseitigen Antriebsdorn 61, der Mitnehmer-Aussenstege 71 aufweist. Das Kassettengehäuse 81 ist diagonal durch eine der Eintrittsöffnungen 91 geschnitten dargestellt, und um die Öffnung herum ragt jeweils ein Ringkragen 110a bzw. 110b symmetrisch zur Gehäusehorizontalmittelebene in den Innenraum des Gehäuses. Der Wickelkern 55 ist einstückig, im allgemeinen aus Kunststoff hergestellt und besitzt unbewegliche Mitnehmerzapfen 111 am Innenumfang, die zum Drehantrieb mit den Aussenstegen 71 des Antriebsdorn 61 in Eingriff treten. Kreisförmige Hinterschneidungen 112 bestimmen in ihrer Dimensionierung das Radialspiel $rs = rs1 + rs2$ des Kerns 52 zum Ringkragen 110a, 110b. Das Axialspiel as setzt sich aus den axialen Teilspielen $as1$ und $as2$ zusammen. Je nach ihrer relativen Bemessung kann das Axialspiel des Ringteils 113 noch durch das Axialspiel ks des Kerns 55 zwischen den gegenüberliegenden Ringkragen 110a und 110b bestimmt sein.

Der Mittelteil 141 des Kerns 55, der auch die Zapfen 111, im Beispiel sechs, trägt, liegt auf dem unteren Ringkragen 110b auf. Dadurch sind die Axialspielwerte $as1$ und $as2$ ungleich gross. Im Idealfall wird der Wickelkern 55 bei Betrieb auf dem Gerät gerade in Mittellage des Gehäuses 81 gehalten, so dass $as1 = as2$ ist.

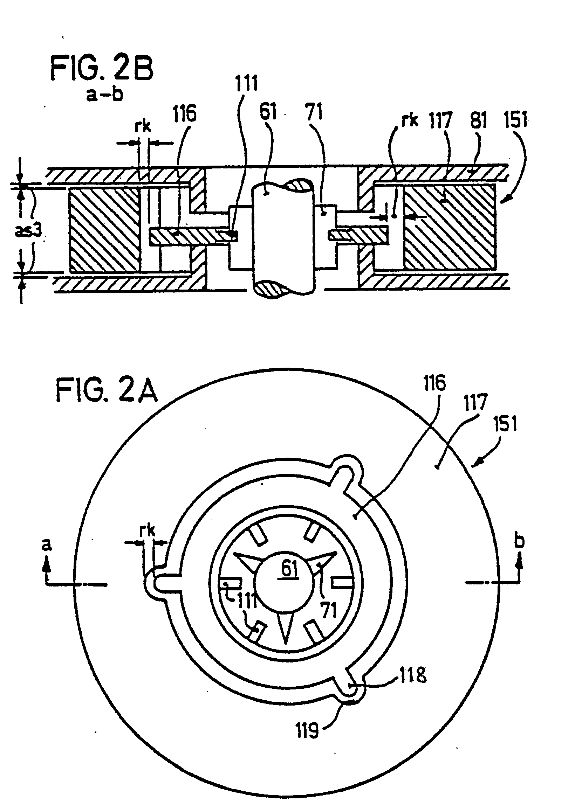

Fig. 2A und 2B zeigen einen ersten Wickelkern 151, wobei gleiche Teile mit gleichen Bezugszeichen wie in Fig. 1 versehen sind. Kern 151 besteht aus den zwei folgenden Teilen: Innenteil 116 und Aussenteil 117, wobei der Innenteil 116 in der Form etwa dem Mittelteil 141 des Kerns 55 entspricht und der Aussenteil 117 formmässig etwa dem Ringteil 113 gleicht. Innen- und Aussenteil 116 und 117 sind über geeignete Massnahmen so miteinander verbunden oder gekoppelt bzw. verbindbar oder koppelbar, dass ein Drehmoment bei am Innenteil 116 angreifenden Antriebsdorn 61 auf den Aussenteil 117 übertragen wird. Wie in Fig. 2A gezeigt, besitzt der Innenteil 116 am Umfang Mitnahme-Fortsätze 181, z.B. drei, die in Mitnahme-Ausnehmungen 119 am Innenumfang des Aussenteils 117 eingreifen. Die Kopplung zwischen Innen- und Aussenteil 116 und 117 kann auch in jeder anderen geeigneten Weise realisiert werden. Fig. 2B zeigt, dass zwischen Innen- und Aussenteil 116 und 117 ein besonderes Radialspiel rk vorgesehen ist, während das Radialspiel rs gegenüber Fig. 1 unverändert geblieben ist. Aussenteil 117 besitzt jedoch zum Gehäuse 81 ein erheblich verringertes Axialspiel as3, wodurch die vorerwähnten Vorteile einer besseren und genaueren Wickeldrehung erreichbar sind. Durch das besondere Radialspiel rk können vorteilhaft geräte- und/oder kassettenseitige Toleranzen oder Fehler wie z.B. Schiefstellung des Antriebsdorns, fehlerhafte Anordnung des Antriebsdorns, Durchmesserschwankungen von Antriebsdornen usw. ausgeglichen werden. In Axialrichtung sind Innenteil 116 und Aussenteil 117 beliebig relativ zueinander bewegbar, solange die Masse wie in Fig. 2 ausgelegt sind und solange kein flexibles Medium zwischen Innen- und Aussenteilen 116 und 117 vorhanden ist. Die axiale Beweglichkeit des Innenteils 116 zum Aussenteil 117 ist im Beispiel auf den Abstand ks zwischen den Ringkragen 110a und 110b begrenzt.

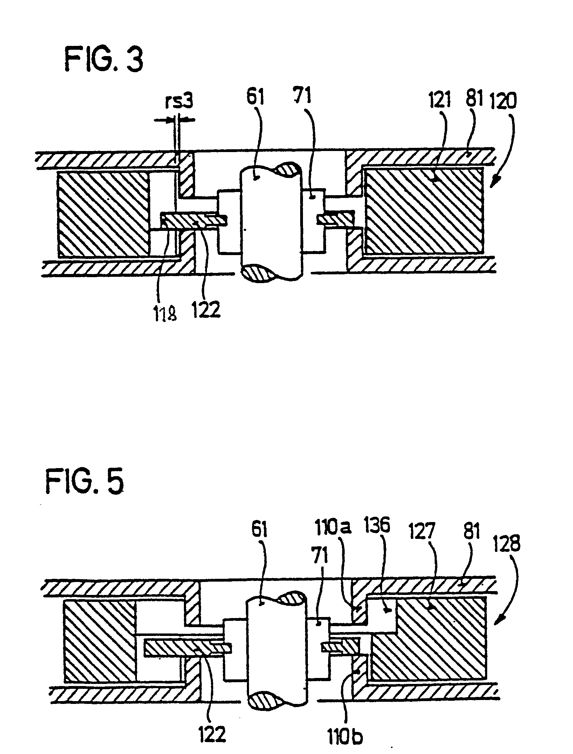

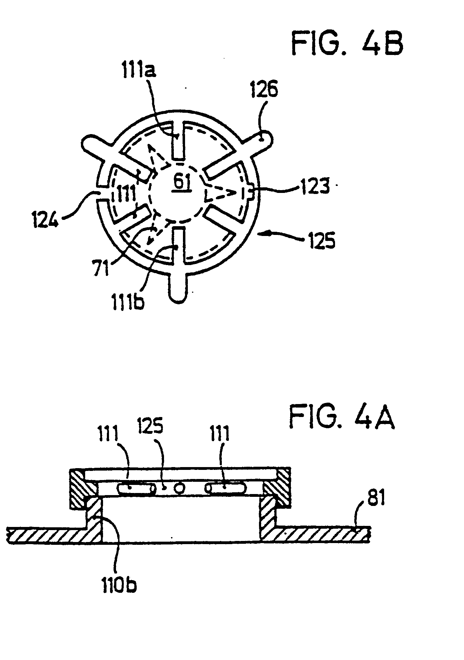

In Fig. 3 ist ein Wickelkern 120 dargestellt, dessen Aussenteil 121 gegenüber Ringkragen 110a und 110b, also in Radialrichtung wesentlich enger toleriert ist als in Fig. 2 der Aussenteil 117. Dieses geringere Radialspiel rs3 hat den Vorteil einer noch besseren Zentrierung und damit eines genaueren Rundlaufs des Wickelkerns 120 und damit des darauf befindlichen, nicht gezeigten Bandwickels. Der Innenteil 122 entspricht dem Teil 116 in Fig. 2 mit etwas verkleinertem Durchmesser. Fig. 4B zeigt einen Innenteil 125, dessen Aussen- und Innendurchmesser je nach der jeweiligen Grösse des Schlitzes 124 veränderbar sind. Diagonal gegenüber dem Schlitz 124 kann eine im Querschnitt verjüngte, federnde Stelle 123 vorgesehen sein, wenn das Material des Innenteils 125 nicht selbst flexibel genug ist. Bei entsprechender Dimensionierung der Mitnahme-Fortsätze 126 ist es möglich, den Innenteil 125 über einen umlaufenden Rand am Ringkragen 110b anzuklemmen, s. Fig. 4B, so dass erst bei Eintritt des Antriebsdorns 61 der Innenteil 125 vom Ringkragen 110 b gelöst und in die Mittellage gebracht und dort mit dem zugehörigen, hier nicht dargestellten Aussenteil gekoppelt wird. In jedem Fall sind die Mitnahme-Fortsätze 126 relativ zu den Ausnehmungen im Aussenteil so zu dimensionieren, dass bei jedem Durchmesser des Innenteils 125 eine einwandfreie Mitnahme des Aussenteils des Wickelkerns erfolgt. Mit diesem, im Umfang flexiblen Innenteil 125 eines Wickelkerns ist es besonders gut möglich, Durchmessertoleranzen von Antriebsdornen auszugleichen für optimal zentrierten Antrieb. Messreihen ergaben Durchmessertoleranzen zwischen 7,35 mm und 8,0 mm, bei einer Anzahl von 117 verschiedenen Kassettengeräten. Es ist weiterhin auch möglich, die Länge der Mitnehmerzapfen 111 unterschiedlich auszulegen, z.B., wenn diagonale Zapfen 111a und 111b einem dem Mindestdurchmesser von 7,35 mm entsprechenden Abstand besitzen und die anderen Zapfen 111 dem grössten Durchmesser von 8,0 mm angepasst werden oder umgekehrt. Es empfiehlt sich jedoch, immer zwei diagonale Zapfen gleich lang auszubilden.

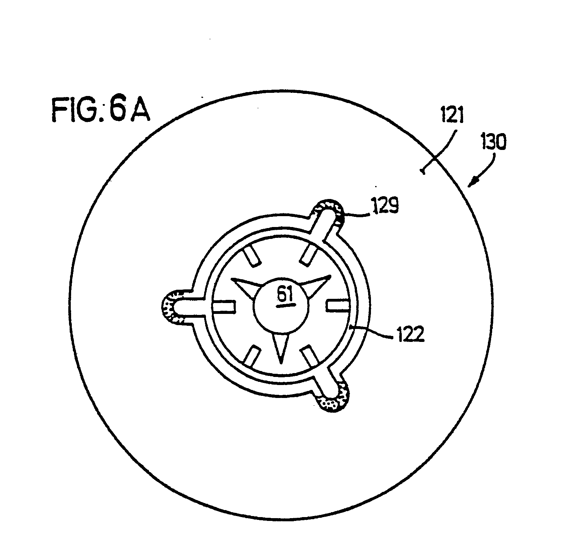

Fig. 5 zeigt, im Unterschied zu den bisher beschriebenen, zur Mittelebene der Kassette symmetrischen Wickelkernen, eine unsymmetrische Kernausführung 128. Der Unterschied besteht im wesentlichen im Aussenteil 127, der gegenüber dem Aussenteil 121 in Fig. 3 eine Hinterschneidung 136, entsprechend Bezugsziffer 112 in Fig. 1B, hier jedoch nur dem oberen Ringkragen 110a zugeordnet, aufweist. Die untere Hälfte des Aussenteils 127 ist gegenüber dem Ringkragen 110b eng toleriert wie Aussenteil 121 in Fig. 3. Diese Kernausführung hat den Vorteil, dass eine Orientierung des Wickelkerns 128 an nur einer Gehäusehälfte, hier dem Unterteil mit Ringkragen 110b, erreicht wird, da sonst die Toleranzen von Ober- und Unterteil des Gehäuses bei der Dimensionierung des Wickelkerns berücksichtigt werden müssen.

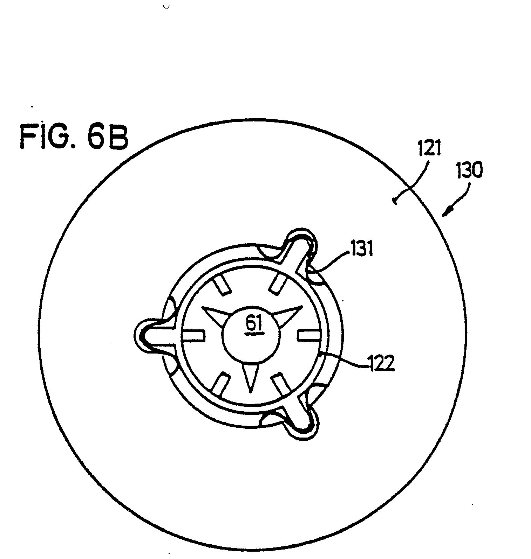

Fig. 6A zeigt einen Wickelkern 130, bestehend aus Innenteil 122 und Aussenteil 121, wie in Fig. 2A, wobei hier jedoch der Zwischenraum zwischen Mitnahme-Fortsätzen 118 und -Ausnehmungen 119 ein elastisches Medium wie z.B. gummielastischer Schaumstoff vorgesehen ist. Bei der Verwendung von drei gleichen Schaumstoffstücken 129 wird eine selbsttätig rückstellbare Zentrierung des Innenteils 122 erreicht. Bei Verwendung nur eines der Stücke 129 oder von Stücken mit verschieden elastisch federnden Eigenschaften, kann auch eine gewünschte Dezentrierung des Innenteils 122 realisiert werden, so dass z.B. ein oder zwei der Mitnahmestege 71 des Antriebsdorns 61 in Kontakt mit den Zapfen 111 kommen. Fig. 6B zeigt denselben Wickelkern 130 jedoch mit Folienstücken 131 anstelle der Schaumstoffstücke 129.

In beiden Fällen ist eine elastisch federnde Kopplung zwischen Innen- und Aussenteil 122 und 121 angestrebt, und die Federstücke 129 und 131 sind aus entsprechenden Materialien auszuwählen und entsprechend zu dimensionieren.

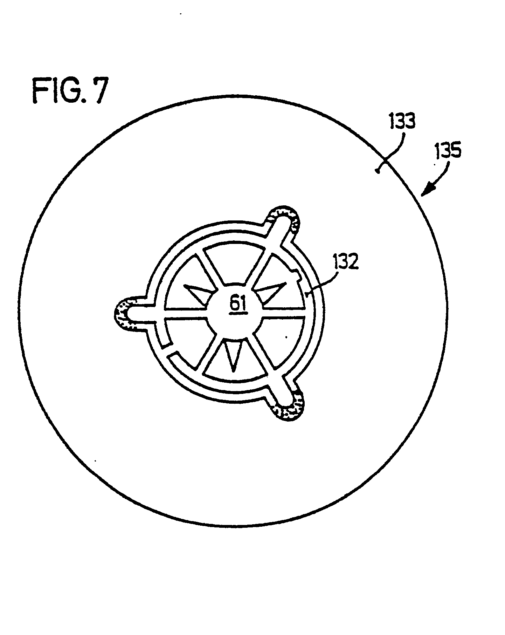

In Fig. 7 ist als eine weitere Variante ein Wickelkern 135 dargestellt. Dabei ist, wie aus Fig. 7 erkennbar, ein Innenteil, im wesentlichen entsprechend dem Innenteil 125 in Fig. 4, auf dem Antriebsdorn 61 befestigt, vorgesehen. Die Antriebsdorn-Innenteil-Einheit 132 tritt also als ganzes in die Kassettenöffnung 91 ein und kommt in Eingriff mit dem in Kassettengehäuse 81 befindlichen Aussenteil 133, der im wesentlichen den Aussenteilen 117 und 121 entspricht und der nötigenfalls elastische Schaumstoff- oder Folienstücke 129 oder 131 aufweisen kann.

Die Kopplung zwischen einer Antriebsdorn-Innenteil-Einheit und einem Aussenteil in der Kassette kann in jeder geeigneten Weise erfolgen, bei der im Ergebnis sichergestellt ist, dass das Antriebsmoment im wesentlichen schlupflos auf den Aussenteil und damit auf den Bandwickel übertragen wird. So sind z.B. konische Formen von Innen- und Aussenteil denkbar, gegebenenfalls mit einem entsprechenden, haftungserzeugenden Material, das jedoch auch eine leichte Trennung der Teile ermöglicht.

Durch eine geeignete Materialauswahl beim Innenteil und beim Aussenteil und gegebenenfalls bei einem Zwischenteil ist es möglich, die gewünschten Kopplungskräfte zwischen Innen- und Aussenteil bei Drehantrieb einzustellen. Der Aussenteil sollte jedoch im wesentlichen so starr ausgebildet sein, dass er seine Bandwickel-Tragfunktion voll erfüllen kann. Für den Innenteil ist die Verwendung elastischer Materialien möglich, sofern das Drehmoment vom Antriebsdorn noch relativ verlustlos auf den Aussenteil übertragen wird. Es ist darauf zu achten, dass durch die Verwendung elastischer Materialien beim Innenteil oder Zwischenteil die Toleranzen rs und as des Aussenteils zum Kassettengehäuse nicht zu klein gewählt werden.

Als Grössenordnung von Radialspiel und Axialspiel des Aussenteils zum Gehäuse sind Werte im Bereich 0,1 mm≦rs, as≦0,2 mm praktisch realisierbar.

Aufgrund der erfindungsgemässen Kopplung zwischen Innen- und Aussenteil ist eine beweglich federnde Ausbildung der Mitnehmerzapfen 111 nicht notwendig, bei elastisch federnder Ausführung des gesamten Innenteils ist eine Elastizität der Zapfen jedoch auch nicht nachteilig.

In der Praxis liegt das Spiel rk zwischen Innen- und Aussenteil des Kerns in der Grössenordnung von rs (s.o).

In praktischen Versuchen konnten sowohl die mechanischen als auch die elektroakustischen Eigenschaften von handelsüblichen Kompakt-Kassetten durch Ausrüstung mit erfindungsgemäss ausgebildeten Wickelkernen wesentlich verbessert werden. Durch Verlagerung des Innenteils auf die Geräteseite, d.h. Ausbildung des Antriebsdorns mit einem in die Kassette eingreifenden Innenkern ist eine Verbilligung der Kassette und eine Verbesserung der Drehmomentübertragung vom Antriebsdorn auf den Innenkern möglich.

Eine elastische Kopplung zwischen Innen- und Aussenteil kann z.B. durch gummielastische Materialien erzielt werden.

Das notwendige Spiel wird erfindungsgemäss in den letzten Ausführungsbeispielen der Erfindung vorteilhaft zwischen Innen- und Aussenteil des Wickelkerns aufgebracht, so dass ohne Änderungen am Kassettengehäuse ein enges Anpassen des Aussenteils an das Kassettengehäuse erreicht wird.

## Patentansprüche

1. Magnetbandkassette, insbesondere Kompaktkassette, mit mindestens einem Wickelkern (55), der aus zwei Ringteilen, einem Innenteil (116) mit Mitnehmerzapfen (111) und einem Aussenteil (117) besteht, wobei die Mitnehmerzapfen (111) mit Aussenstegen eines geräteseitigen Antriebsdorns (71) zum Drehantrieb des Wickelkerns (55) in Eingriff treten, wobei zwischen Innenflächen des Kassettengehäuses und dem Ringteil nur ein geringes Spiel vorhanden ist, wobei zwischen Innen- und Aussenteil (116 und 117) ein vorbestimmtes, radiales Spiel vorgesehen ist und wobei ein Ringteil mindestens einen Mitnehmerfortsatz (118) aufweist, der jeweils mit einer Mitnehmerausnehmung (119) im anderen Ringteil zum Drehantrieb gekoppelt ist, dadurch gekennzeichnet, dass entweder der den Mitnehmerfortsatz (118) aufweisende Innenteil (116, 122, 125 und 132) selbst oder mindestens ein Element (129, 131) zwischen dem Mitnehmerfortsatz (118) und der Mitnehmerausnehmung (119) elastisch federnd ausgebildet ist zur Kopplung des Innenteils (116, 122, 125, 132) zum Drehantrieb des Wickelkerns (55, 130, 135) und zur Herstellung des vorbestimmten Spiels (rk) zwischen den Teilen.

2. Kassette nach Anspruch 1, dadurch gekennzeichnet, dass das oder die federnden Zwischenelemente (129) aus gummielastischem Material, insbesondere Schaumstoff bestehen.

3. Kassette nach Anspruch 1, dadurch gekennzeichnet, dass das oder die federnden Zwischenelemente (131) aus flexiblem Folienmaterial bestehen.

4. Kassette nach Anspruch 2 oder 3, dadurch gekennzeichnet, dass die federnden Zwischenelemente (129, 131) zentralsymmetrisch am Wickelkern (130, 135) angeordnet sind.

5. Kassette nach einem der Ansprüche 2 oder 3, dadurch gekennzeichnet, dass ein federndes Zwischenelement (129, 131) asymmetrisch am Wickelkern angeordnet ist.

6. Kassette nach Anspruch 1, dadurch gekennzeichnet, dass der Innenteil (125) als Klemmteil für den Antriebsdorn (61) ausgebildet ist.

7. Kassette nach Anspruch 1, dadurch gekennzeichnet, dass der Innenteil (125) als Klemmteil für einen Ringkragen (110b in Fig. 4A) ausgebildet ist.

## Claims

1. A magnetic tape cassette, particularly a compact cassette, comprising at least one hub (55) which consists of two annular parts, an inner part (116) with teeth (111), and an outer part (117), the teeth (111) cooperating – for rotation of the hub (55) – with projecting keys of a drive spindle (71) on the recorder, there being only slight play between the inner walls of the cassette housing and the ring member, a predetermined radial play being provided between inner and outer parts (116 and 117), and one ring member having at least one projection (118) which cooperates with a recess (119) in the other annular part for rotation of the latter, wherein either the inner part (116, 122, 125, 132) itself, which has the projection (118), or at least one element (129, 131) between the projection (118) and the recess (119) ist springy for coupling the inner part (116, 122, 125, 132) to the outer part for the purpose of rotating the hub (55, 130, 135) and of establishing the predetermined play (rk) between the parts.

2. A cassette as claimed in claim 1, wherein the spring element(s) (129) constists/consist of elastomeric material, particularly foam.

3. A cassette as claimed in claim 1, wherein the spring elements(s) (131) consists/consist of flexible sheet material.

4. A cassette as claimed in claim 2 or 3, wherein the spring elements (129, 131) are arranged symmetrically with respect to the axis of rotation of the hub (130, 135).

5. A cassette as claimed in claim 2 or 3, wherein a spring element (129, 131) ist arranged asymmetrically with respect to the axis of rotation of the hub.

6. A cassette as claimed in claim 1, wherein the inner part (125) is designed as a clamping member for the drive spindle (61).

7. A cassette as claimed in claim 1, wherein the inner part (125) is designed as a clamping member for an annular collar (110b in Fig. 4a).

## Revendications

1. Cassette de bande magnétique, en particulier cassette de compacte, munie d'au moins un noyau d'enroulement (55) qui est constitué de deux parties annulaires, une partie intérieure (116) à tenons d'entraînement (111) et une partie extérieure (117), les tenons d'entraînement (111) venant en prise avec des nervures externes d'une broche de commande (71), côté appareil, pour commander la rotation du noyau d'enroulement (55), un faible jeu seulement existant entre les surfaces intérieures du boîtier de cassette et la partie annulaire, un jeu radial prédéterminé étant prévu entre parties intérieure et extérieure (116 et 117) et une partie annulaire comportant au moins un appendice d'entraînement (118) qui est accouplé avec un évidement d'entraînement (119) dans l'autre partie annulaire, pour l'entraînement en rotation, caractérisée par le fait que soit la partie intérieure (116, 122, 125 et 132) elle-même, possédant d'appendice d'entraînement (118), soit au moins un élément (129, 131) compris entre l'appendice d'entraînement (118) et l'évidement d'entraînement (119) est monté élastiquement pour l'accouplement de la partie intérieure (116, 122, 125, 132) en vue de l'entraînement en rotation du noyau d'enroulement (55, 130, 135) et pour l'obtention du jeu prédéterminé (rk) entre les parties.

2. Cassette selon la revendication 1, caractérisée par le fait que le ou les éléments intermédiaires élastiques (129) sont en une matière ayant l'élasticité du caoutchouc ou en matière alvéolaire.

3. Cassette selon la revendication 1, caractérisée par le fait que le ou les éléments intermédiaires élastiques (131) sont en une matière en feuille flexible.

4. Cassette selon la revendication 2 ou 3, caractérisée par le fait que le ou les éléments intermédiaires élastiques (129, 131) sont disposés symétriquement par rapport à un plan axial du noyau d'enroulement (130, 135).

5. Cassette selon l'une des revendications 2 ou 3, caractérisée par le fait qu'un élément intermédiaire élastique (129, 131) est disposé de façon asymétrique sur le noyau d'enroulement.

6. Cassette selon la revendication 1, caractérisée par le fait que le partie intérieure (125) est agencée en partie de serrage pour la broche d'entraînement (61).

7. Cassette selon la revendication 1, caractérisée par le fait que la partie intérieure (125) est agencée en partie de serrage pour un collet annulaire (110b sur la fig. 4B).

## FIG. 1 B
### a-b

## FIG. 1 A

# FIG. 2B
### a–b

# FIG. 2A

# FIG. 3

# FIG. 5

# FIG. 4B

# FIG. 4A

FIG. 6A

FIG. 6B

FIG. 7